# EUROPEAN PATENT APPLICATION

(11) **EP 4 712 271 A1**
(43) Date of publication of application: **18.03.2026**
(21) Application number: 25187046.5
(22) Date of filing: 02.07.2025
(51) Int. Cl.: H01R 4/30, H01R 4/34, H01R 4/58, H01R 11/01, H02G 5/00, H01R 4/02, H01R 4/10

(54) **BUSBAR UNIT, MODULE CONNECTING ARRANGEMENT AND COUPLING ARRANGEMENT**

(30) Priority: 03.07.2024 CN 202410890319; 18.03.2025 DE 102025110467
(71) Applicant: TE Connectivity Solutions GmbH, 8200 Schaffhausen (CH); Tyco Electronics (Shanghai) Co., Ltd., Shanghai 200131 (CN)
(72) Inventor: BALLES, Wolfgang, 8200 Schaffhausen (CH); SAENGER, Walter, 8200 Schaffhausen (CH); YANG, Yuchen, Shanghai, 200131 (CN); ZHOU, Xiao (Nichee), Shanghai, 200131 (CN); LI, Ziwei (Vivi), Shanghai, 200131 (CN); CHEN, Hao, Shanghai, 200131 (CN)
(74) Representative: Patentanwaltskanzlei WILHELM & BECK

(57) **Abstract**

The invention relates to a busbar unit (100) comprising a busbar body (101) and a connecting device (103) for connecting the busbar body (101) to a module connecting element and/or to a further busbar unit (303), wherein the connecting device (103) has a connecting body (107) which projects from a connecting end (105) of the busbar body (101) and has a first coupling end (109) and a second coupling end (111) opposite the first coupling end (109), wherein the connecting device (103) is formed on the connecting end (105) of the busbar body (101) via the first coupling end (109), wherein the connecting body (107) comprises a coupling unit (113) at the second coupling end (111) for coupling the connecting device (103) to the module connecting element and/or the further busbar unit (303), wherein a coupling position (P) of the connecting device (103) is defined via the coupling unit (113), and wherein the coupling position (P) of the connecting device (103) can be variably aligned relative to the busbar body (101) of the busbar unit (100) with respect to a direction of translation (T) and/or an axis of rotation (R).

The invention also relates to a module connecting arrangement (200) with a busbar unit (100) and a coupling arrangement (300) for connecting busbar units (100).

## Description

The invention relates to a busbar unit, a module connecting arrangement with a busbar unit and a coupling arrangement for coupling busbar units.

Busbar units, module connecting arrangements with busbar units and coupling arrangements for busbar units are known from the prior art.

The object of the invention is to provide an improved busbar unit, an improved module connecting arrangement with a busbar unit, and an improved coupling arrangement for busbar units.

The object of the invention is achieved by the busbar unit, the module connecting arrangement and the coupling arrangement of the independent claims. Advantageous embodiments are the subject matter of the dependent claims.

According to one aspect of the invention, a busbar unit comprising a busbar body and a connecting device for connecting the busbar body to a module connecting element and/or to a further busbar unit is provided, wherein the connecting device has a connecting body projecting from a connecting end of the busbar body and having a first coupling end and a second coupling end opposite the first coupling end, wherein the connecting device is formed at the connecting end of the busbar body via the first coupling end, wherein the connecting body comprises a coupling unit at the second coupling end for coupling the connecting device to the module connecting element and/or the further busbar unit, wherein a coupling position of the connecting device is defined via the coupling unit, and wherein the coupling position of the connecting device can be variably aligned relative to the busbar body of the busbar unit with respect to a direction of translation and/or an axis of rotation.

It is thereby possible to achieve the technical advantage that an improved busbar unit can be provided that allows a tolerance compensation. For this purpose, the busbar unit comprises a connecting device on a busbar body. The busbar body of the busbar unit can be connected to a module connecting element of a module connecting unit and/or to a further busbar unit via the connecting device.

The connecting device is aligned here in such a way that when the busbar body of the busbar unit is connected to the module connecting element and/or the further busbar unit via the connecting device, a coupling position at which the connecting device of the busbar unit is connected to the module connecting element and/or to the further busbar unit can be variably aligned along a direction of translation and/or about an axis of rotation relative to the busbar body.

This variable alignment of the coupling position, at which the connecting device is connected to the module connecting element and/or the further busbar unit, can compensate for installation tolerances and/or manufacturing tolerances of the busbar body.

Furthermore, movements of the busbar body, possibly due to vibrations, relative to the module connecting element and/or to the further busbar unit, which are connected to the busbar body via the connecting device, can be compensated for by corresponding movement of the coupling position relative to the busbar body.

This allows the vibrations of the busbar body to be damped by the connecting device, thereby robustly maintaining the connection of the connecting device to the module connecting element and/or the further busbar unit.

This can improve the electrical contact between the module connecting element and/or the further busbar unit via the connecting device with the busbar unit.

According to one embodiment, the direction of translation is aligned at least partially along a longitudinal axis of the busbar body of the busbar unit, and/or wherein the axis of rotation is aligned at least partially along the longitudinal axis or at right angles to the longitudinal axis of the busbar body of the busbar unit.

This can achieve the technical advantage that the alignment of the direction of translation at least partially along the longitudinal axis of the busbar body can cause length tolerances of the busbar body due to the movement of the connecting device. By orienting the axis of rotation partly along the longitudinal axis or at right angles to the longitudinal axis, tilting movements or torsional movements of the busbar body relative to the module connecting element connected to the connecting unit or to the further busbar unit can be compensated for.

This enables a more stable connection between the busbar unit and the module connecting element or the further busbar unit. Furthermore, improved electrical transmission can be achieved.

According to one embodiment, the coupling unit has a through-hole designed as a slot at the coupling end of the connecting body, wherein the busbar body of the busbar unit can be coupled to the module connecting element and/or the further busbar unit via a screw connection via the through-hole, and wherein the coupling position is defined via the positioning of a screw element in the through-hole.

This has the technical advantage that the through-hole, which is designed as a slot, enables a simple and stable connection of the busbar unit to the module connecting element or the further busbar unit via a screw connection.

Furthermore, the slot can be used to achieve a displacement of the respective screw element, via which the screw connection is realized, within the slot. This allows the length tolerance to be achieved.

According to one embodiment, a longitudinal direction of the through-hole designed as a slot is oriented at least partially along the direction of translation.

This can achieve the technical advantage that by aligning the longitudinal direction of the slot at least partially along the direction of translation, the displacement of the screw element within the slot can cause the coupling position defined by the positioning of the screw element in the slot to be displaced along the direction of translation.

According to one embodiment, the connecting body of the connecting device comprises a flexibility portion formed between the first coupling end and the second coupling end, wherein the flexibility portion enables elastic bending of the connecting device along a bending direction.

This can achieve the technical advantage that, by means of the flexibility portion of the connecting body of the connecting device, the first and second coupling ends of the connecting body can be moved towards each other by the elastic bending of the flexibility portion. This allows the coupling position to be moved relative to the connecting end of the busbar body in accordance with the direction of translation or the axis of rotation.

According to one embodiment, the connecting device comprises a multilayer busbar element with a bending portion.

This has the technical advantage of providing a robust connecting device that enables elastic movement.

According to one embodiment, the connecting device comprises a braided band element and/or fabric band element.

This has the technical advantage of providing a robust connecting device that allows the coupling end or the coupling position to be moved in any direction relative to the connecting end of the busbar body.

By designing the connecting device as a braided band or fabric band, the direction of translation or the axis of rotation around which the movement of the coupling position of the connecting device relative to the connecting end of the busbar body is defined can be oriented in any spatial direction. This enables very precise compensation of the tolerances.

According to one embodiment, the connecting device is screwed and/or welded and/or crimped and/or punched to the connecting end of the busbar body of the busbar unit via the first coupling end.

It is thereby possible to achieve the technical advantage that a robust connection of the connecting device to the busbar body is made possible. Furthermore, good electrical conductivity is achieved between the busbar body and the connecting body of the connecting device.

According to one embodiment, the coupling unit at the second coupling end of the connecting body of the connecting device is set up to effect a screw connection and/or a welded connection and/or a crimped connection and/or a punched connection with the module connecting element and/or the further busbar unit.

This has the technical advantage that a robust mechanical and electrical connection can be achieved between the connecting device and the module connecting element and/or the further busbar unit. This can also ensure efficient electrical transmission between the module connecting element and the further busbar unit and the connecting device.

According to one embodiment, the connecting device is spaced from a centre of the connecting end of the busbar body at the connecting end.

This has the technical advantage that the connecting device on the busbar body can be designed to save as much space as possible.

According to one embodiment, the connecting device is designed as a connecting projection in one piece at the connecting end of the busbar body of the busbar unit.

It is thereby possible to achieve the technical advantage that a simple embodiment of the connecting device is made possible. Furthermore, the design of the connecting device as a connecting projection, which is formed in one piece on the busbar body, provides a connecting device that is as robust as possible.

According to one embodiment, the busbar body of the busbar unit is made of one of the following materials: aluminium, copper, aluminium alloy, copper alloy.

This has the technical advantage that a conductive busbar unit can be provided that meets the requirements in terms of stability and electrical transmission of the respective field of application.

According to one embodiment, the connecting body of the connecting device is made of one of the following materials: aluminium, copper, aluminium alloy, copper alloy.

This has the technical advantage of providing a connecting device with a corresponding robustness and stability and electrical conductivity that meets the requirements of the respective field of use.

According to one aspect, a module connecting arrangement for the electrical connection of modules is provided, wherein the module connecting arrangement comprises at least one module connecting element and a busbar unit according to one of the preceding embodiments, wherein the module connecting element comprises a screw element, and wherein the screw element is guided through a through-hole of the coupling unit of the connecting device.

This can achieve the technical advantage that an improved module connecting arrangement for connecting various electrical modules to a busbar unit according to the invention can be provided with the above-mentioned technical advantages.

According to one embodiment, the screw element of the module connecting element is guided through the through-hole of the connecting device of the busbar unit and is arranged to be movable along the direction of translation and/or around the axis of rotation relative to the busbar body of the busbar unit.

This can achieve the technical advantage that by allowing the screw element of the module connecting element of the module connecting arrangement, which is guided through the through-hole of the connecting device, to be moved along the direction of translation and/or about the axis of rotation relative to the busbar body of the busbar unit, a corresponding movement of the busbar body of the busbar unit relative to the module connecting element of the module connecting arrangement is made possible.

This makes it possible to compensate for differences in length, installation inaccuracies and movements of the two components of the module connecting arrangement, i.e., the module connecting element and the busbar unit relative to each other, during operation of the module connecting arrangement. This can be used to absorb vibrations, for example. The electrical and mechanical connection between the module connecting element and the busbar unit therefore remains unaffected by vibrations.

According to one embodiment, a housing casing is formed on the busbar body, wherein a casing collar is formed adjacently to the housing casing at the connecting end.

This has the technical advantage that the housing casing and the casing collar provide secure insulation of the busbar body of the busbar unit.

According to one embodiment, the casing collar comprises a flat conductor seal.

This has the technical advantage that the flat conductor seal in the casing collar provides secure and sealed protection for the components of the module connecting arrangement when the casing collar is coupled to a housing unit of the module connecting arrangement.

According to one embodiment, the module connecting element comprises a housing unit with a first housing part, a second housing part and a third housing part, wherein the first housing part defines a first receiving space with a receiving opening, wherein the second housing part defines a second receiving space, wherein the second receiving space is designed to communicate with the first receiving space and adjoins the first receiving space on a side opposite the receiving opening, wherein the busbar unit can be inserted into the housing unit along a receiving direction through the receiving opening, wherein on insertion the connecting end of the busbar body can be arranged in the first receiving space and the connecting device can be arranged in the second receiving space, and wherein the third housing part adjoins the second housing part and comprises a through-channel oriented perpendicular to the receiving direction of the receiving space for receiving the screw element.

This has the technical advantage that the housing unit provides reliable protection for the busbar unit with the connecting device and the module coupling element with the screw element.

According to one embodiment, the first housing part comprises an opening collar arranged around the receiving opening, wherein the opening collar can be coupled to the casing collar of the housing casing of the busbar body.

This can achieve the technical advantage that the coupling of the opening collar of the first housing part of the housing unit with the casing collar of the housing casing of the busbar body enables comprehensive protection of the components of the module connecting arrangement within the housing unit.

According to one embodiment, the second housing part comprises a flexible housing portion, wherein the first housing part can be moved relative to the third housing part via the flexible housing portion.

This can achieve the technical advantage that the flexible housing portion in the second housing part allows the first housing part to be moved relative to the third housing part. In particular, this allows the busbar body of the busbar unit arranged in the first housing part and the module connecting element arranged in the third housing part, which are connected to each other via the connecting device arranged in the second housing part, to be movable relative to each other.

This allows the tolerance compensation movements to be achieved. Thanks to the flexible housing portion, the entire housing unit 211 nevertheless remains robust despite the aforementioned relative movements of the components to one another.

According to one embodiment, the flexible housing portion is made of a flexible material and/or is designed as a bellows.

It is thereby possible to achieve the technical advantage that a robust flexible housing portion can be provided.

According to one embodiment, an opening collar is formed at each of two opposite ends of the through-channel, wherein a screw head of the screw element and a sealing element can be positioned in the protective collars, wherein a metal sleeve element is positioned in the through-channel, and wherein the screw element can be passed through the sleeve element.

This can achieve the technical advantage that the screw element of the module connecting element can be secured and protected in the housing arrangement by the opening collars at the opposite ends of the through-channel of the third housing part.

According to one embodiment, the screw element is designed as a 3-component screw.

The technical advantage of this is that the design of the screw element as a 3-component screw provides a high level of safety for users of the module connecting arrangement.

According to one aspect, a coupling arrangement for coupling two busbar units is provided, comprising a coupling device, a busbar unit according to one of the preceding embodiments and a further busbar unit, wherein the busbar unit and the further busbar unit are connected to one another via the connecting device of the busbar unit.

This can achieve the technical advantage that an improved coupling arrangement for coupling two busbar units to a busbar unit according to the invention can be provided with the technical advantages described above.

According to one embodiment, the coupling arrangement further comprises a protective housing unit with a first housing wall, a second housing wall and a receiving space defined between the first and second housing walls, wherein a first insertion opening is formed in the first housing wall and a second insertion opening is formed in the second housing wall, wherein the busbar unit with the connecting end and the connecting device can be positioned in the receiving space via the first insertion opening, wherein the further busbar unit with a further connecting end can be positioned in the receiving space via the second insertion opening, and wherein the busbar unit and the further busbar unit connected to the busbar unit via the connecting device can be moved relative to one another within the receiving space.

This can achieve the technical advantage that the protective housing unit of the coupling arrangement comprehensively protects the connection of the two busbar units via the connecting device.

As the two busbar units connected to each other via the connecting device can be moved relative to each other within the receiving space of the protective housing unit, the tolerances can be compensated for by the mobility of the connecting device.

According to one embodiment, the protective housing unit comprises a flexible housing part arranged between the first and second housing walls.

This has the technical advantage that the flexible housing part of the protective housing unit can compensate for the relative movements of the two busbar units.

According to one embodiment, the coupling arrangement further comprises a screw element, wherein the protective housing unit comprises, between the first housing wall and the second housing wall, a housing base with a threaded region and a housing cover arranged opposite the housing base, wherein a feed-through opening for the passage of the screw element is formed in the housing cover, wherein the screw element can be passed through a further through-hole formed at the further connecting end of the further busbar unit and through a through-hole of the coupling device of the connecting device of the busbar unit and can be screwed into the threaded region.

This has the technical advantage that the screw element can be used to achieve precise fixing of the two busbar units relative to each other and to the housing base of the protective housing unit via the connecting device. This enables a very robust coupling arrangement of the two busbar units.

According to one embodiment, the coupling arrangement further comprises a structured annular element, wherein the structured annular element is positionable between the busbar unit and the further busbar unit, wherein the screw element is guidable through the structured annular element, and wherein the structured element is made of a material having a higher degree of hardness than the connecting device and/or the further busbar unit.

This has the technical advantage that the high degree of hardness of the structured annular element can be used to create an electrical connection between the two busbar units via the structured annular element.

Due to the higher degree of hardness, oxidation-related contamination of the surfaces of the busbar bodies of the two busbar units can be reduced. This can increase the electrical conductivity of the connection between the two busbar units. The structured annular element is made of an electrically conductive material.

The invention is explained in more detail below with the aid of the figures, in which:
- figure 1: shows a schematic illustration of a busbar unit according to an embodiment,
- figure 2: shows a further schematic illustration of a busbar unit according to a further embodiment,
- figure 3: shows a further schematic illustration of a busbar unit according to a further embodiment,
- figure 4: shows a schematic exploded illustration of a module connecting arrangement with a busbar unit according to an embodiment,
- figure 5: shows a schematic sectional illustration of the module connecting arrangement with a busbar unit from figure 4,
- figure 6: shows a further schematic exploded illustration of a module connecting arrangement with a busbar unit according to a further embodiment,
- figure 7: shows a further schematic exploded illustration and a further schematic sectional illustration of a module connecting arrangement with a busbar unit according to a further embodiment,
- figure 8: shows schematic illustrations of the module connecting arrangements with a busbar unit from figures 6 and 7,
- figure 9: shows a schematic sectional illustration of a coupling arrangement for busbar units according to an embodiment,
- figure 10: shows a further schematic sectional illustration of a coupling arrangement for busbar units according to a further embodiment, and
- figure 11: shows a further schematic sectional illustration of a coupling arrangement for busbar units according to a further embodiment.

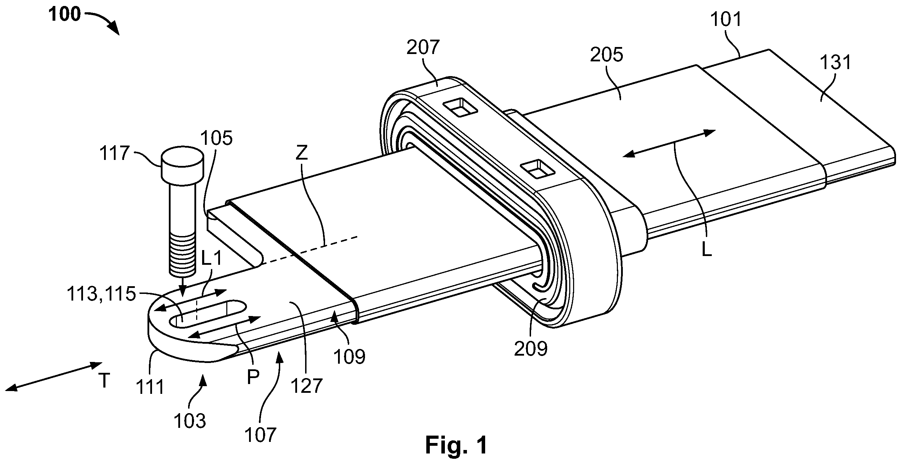

Figure 1 shows a schematic illustration of a busbar unit 100 according to an embodiment.

According to the invention, the busbar unit 100 has a busbar body 101 and a connecting device 103. The busbar body 101 is flat and has a rectangular shape with at least one connecting end 105.

The connecting device 103 has a connecting body 107 with a first coupling end 109 and a second coupling end 111. The connecting device 103 is formed at the connecting end 105 of the busbar body 101 via the first coupling end 109.

The connecting device 103 has a coupling unit 113 at the second coupling end 111. The coupling unit 113 defines a coupling position P. According to the invention, the coupling position P can be variably aligned with respect to a direction of translation T and/or a rotation axis R relative to the busbar body 101 of the busbar unit 100.

In the embodiment shown, the coupling unit 113 is designed as a through-hole 115 formed as a slot.

Via the coupling unit 113, the busbar unit 100 can be connected, for example, to a module connecting element 201 of a module connecting arrangement 200, neither of which is shown in figure 1, or to a further busbar unit 303, also not shown in figure 1, via a screw connection by means of a screw element 117.

For this purpose, the screw element 117 can be guided through the through-hole 115 and moved along a longitudinal direction L1 of the slot.

The coupling position P can be defined via the positioning of the screw element 117 within the through-hole 115 of the coupling unit 113. By shifting the positioning of the screw element 117 along the longitudinal direction L1, the coupling position P can thus be shifted relative to the busbar body 101.

In the embodiment shown, the longitudinal direction L1 of the through-hole 115 formed as a slot is at least partially aligned along the direction of translation T by which the coupling point P can be displaced relative to the busbar body 101.

In the embodiment shown, both the longitudinal direction L1 of the slot and the direction of translation T are at least partially aligned along a longitudinal axis L of the busbar body 101.

By displacing the screw element 117 along the longitudinal direction L1 in the slot of the coupling unit 113, the coupling point P can thus be displaced along the longitudinal direction L of the busbar body 101. In particular, this allows length tolerances of the busbar body 101 to be compensated for when connected to a module connecting element 201 of a module connecting arrangement 200 and/or when connected to a further busbar unit 303.

In the embodiment shown, the connecting device 103 is designed as a connecting projection 127. The connecting projection 127 is formed in one piece on the connecting end 105 of the busbar body 101.

In the embodiment shown, the connecting device 103 is also formed at a distance from a centre Z of the busbar body 101 at the connecting end 105 of the busbar body 101. The connecting device 103 is thus formed on a side region of the connecting end 105.

In the embodiment shown, the busbar body 101 further comprises a housing casing 205 with a casing collar 207. A flat conductor seal 209 is formed in the casing collar 207.

The housing casing 205, the casing collar 207 and the flat conductor seal 209 can be made of an electrically insulating material, for example a plastics material.

According to one embodiment, the busbar body 101 can be made of one of the following materials: aluminium, copper, aluminium alloy, copper alloy.

According to one embodiment, the connecting body 107 of the connecting device 103 can be formed from one of the following materials: aluminium, copper, aluminium alloy, copper alloy.

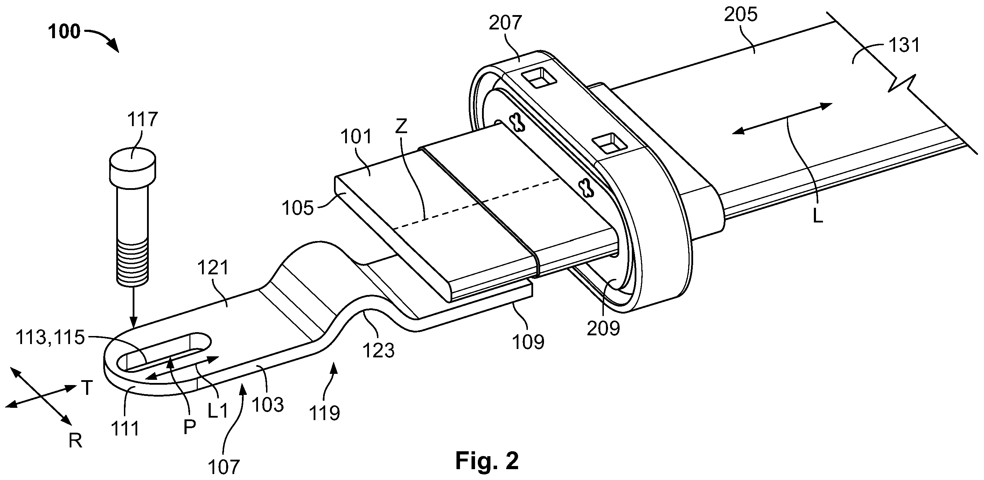

Figure 2 shows a further schematic illustration of a busbar unit 100 according to a further embodiment.

The embodiment in figure 2 is based on the embodiment in figure 1 and includes all the features described there.

In the embodiment shown, the connecting device 103 has a different design compared to the embodiment in figure 1. In figure 2, the connecting device 103 is not designed as a rigid connecting projection, but has a flexibility portion 119. The connecting device 103 can be elastically deformed via the flexibility portion 119.

In the embodiment shown, the connecting body 107 of the connecting device 103 is accordingly designed as a multilayer busbar element 121 with a bending portion 123. The connecting device 103 can thus be elastically bent about the axis of rotation R by the bending portion 123 in the embodiment shown. In the embodiment shown, the axis of rotation R is parallel to a surface 131 of the busbar body 101.

Alternatively, the axis of rotation R can also be positioned in other spatial directions, so that bending of the connecting body 107 of the connecting device 103 about other spatial directions is possible. For this purpose, the bending portion 123 could possibly be designed with a different bending direction.

The translational movement of the coupling position P again takes place analogously to the embodiment in figure 1 along the longitudinal direction L1 of the through-hole 115 of the coupling unit 113, which is designed as a slot.

Alternatively, the longitudinal direction L1 of the slot can also be oriented in a different spatial direction, so that the translational movement along the translational direction is also oriented in a different spatial direction.

The translational movement and the rotational movement of the coupling point P relative to the busbar body 101 can compensate for corresponding tolerances in production and assembly between the busbar unit 100 and any connected module connecting element 201 of a module connecting arrangement 200, neither of which is shown in figure 2, or a further busbar unit 303, also not shown in figure 2.

In the embodiment shown, the connecting device 103 is connected to the busbar body 101 of the busbar unit 100 at the connecting end 105 via the first coupling end 109 by means of a screw connection and/or welded connection and/or crimped connection and/or punched connection.

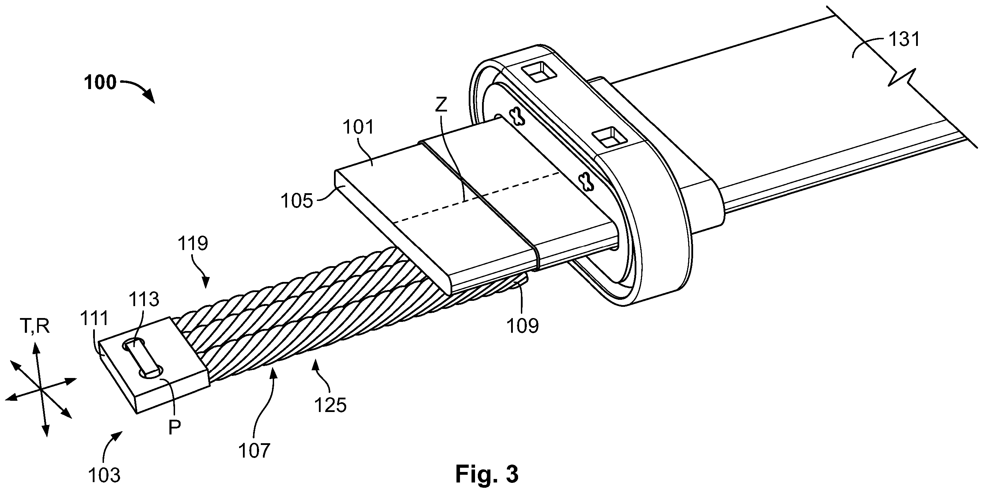

Figure 3 shows a further schematic illustration of a busbar unit 100 according to a further embodiment.

The embodiment in figure 3 is based on the embodiment in figure 2 and includes all the features described there.

In the embodiment shown, the connecting body 107 of the connecting device 103 is provided with a flexibility portion 119 in accordance with the embodiment in figure 2. For this purpose, in the embodiment shown, the connecting body 107 is designed as a braided band element 125.

The second coupling end 111 can be moved in any spatial direction relative to the first coupling end 109 and thus to the busbar body 101 by the braided band element 125.

In the embodiment shown, the connecting device 103 is connected to a module connecting element 201 of a module connecting arrangement, neither of which is shown in figure 3, or to a further busbar unit 303, also not shown in figure 3, via a screw connection and/or a welded connection and/or a crimped connection and/or a punched connection to the coupling unit 113 formed at the second coupling end 111.

In contrast to the embodiments of figures 1 and 2, the coupling unit 113 in the embodiment shown does not have a through-hole 115 formed as a slot. The coupling position P is thus defined by the point provided at the second coupling end 111 for the intended screw connection and/or welded connection and/or crimped connection and/or punched connection.

Due to the flexibility of the braided band element 125, said coupling position P can be moved relative to the busbar body 101 by rotational or torsional movements and/or translational movements along the direction of translation T or about the axis of rotation R.

As shown in figure 3, the direction of translation T or the axis of rotation R can be oriented in any spatial direction. This allows tolerances or movements of the busbar body 101 in any spatial direction to be compensated for.

According to the embodiments of figures 1 and 2, the connecting body of the connecting device 103 is made of one of the following materials: aluminium, copper, aluminium alloy, copper alloy.

The connection of the first coupling end 109 to the busbar body 101 can again be effected via a screw connection and/or welded connection and/or crimped connection and/or punched connection.

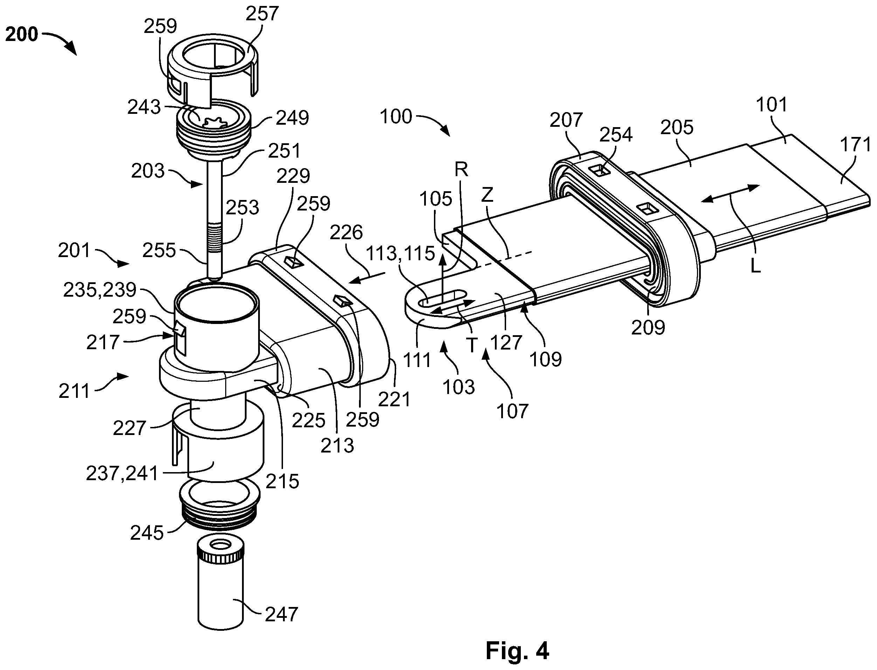

Figure 4 shows a schematic exploded view of a module connecting arrangement 200 with a busbar unit 100 according to one embodiment.

According to the invention, the module connecting arrangement 200 for electrically connecting modules comprises at least one module connecting element 201 and a busbar unit 100 according to the invention.

In the embodiment shown, the module connecting arrangement 200 comprises a busbar unit 100 according to the invention according to the embodiment in figure 1.

According to the invention, the module connecting element 201 comprises a screw element 203. The screw element 203 can be guided through the through-hole 115 of the coupling unit 113 of the connecting unit 103 of the busbar unit 100.

When the screw element 203 of the module connecting element 201 is positioned through the through-hole 115 of the connecting device 103, the screw element 203 in the embodiment shown can be moved along the direction of translation T relative to the busbar body 101 of the busbar unit 100.

As explained in the description of figure 1, in the embodiment shown, the longitudinal direction L1 of the through-hole 115 of the coupling arrangement 113, which is designed as a slot, is arranged at least partially along the direction of translation T. In other words, the direction of translation T is largely given by the orientation of the longitudinal direction L1 of the slot of the coupling unit 113.

When positioned through the through-hole 115, the screw element 203 can thus be moved along the longitudinal direction L1 of the slot and thus along the correspondingly defined direction of translation T relative to the busbar body 101.

In the embodiment shown, the module connecting element 201 further comprises a housing unit 211 with a first housing part 213, a second housing part 215 and a third housing part 217.

Here, the first housing part 213 defines a first receiving space 219 with a receiving opening 221, neither of which is shown in detail in figure 4.

Accordingly, the second housing part 215 defines a second receiving space 223, which is also not shown in figure 4.

In this case, the second receiving space 223 is designed to communicate with the first receiving space 219 and is designed to adjoin the first receiving space on a side 225 of the housing unit 211 opposite the receiving opening 221.

Further, the third housing part 217 is formed adjacent to the second housing part 215 such that the second housing part 215 is formed between the first housing part 213 and the third housing part 217.

The third housing part 217 comprises a through-channel 227 for receiving the screw element 203.

Along a receiving direction 226, the busbar body 101 with the connecting device 103 of the busbar unit 100 can be inserted through the receiving opening 221 into the first and second receiving spaces 219, 223 of the housing unit 211.

The through-channel 227 of the third housing part 217 is formed here in a direction perpendicular to the receiving direction 226.

In the embodiment shown, the through-channel 227 comprises a first opening collar 239 at a first end 235 and a second opening collar 241 at a second end 237 arranged opposite the first end 235.

When the screw element 203 is positioned in the through-channel 227, a screw head 243 is positioned in the first opening collar 239. A sealing element 245 is positioned in the second opening collar 241.

In the embodiment shown, a metal sleeve element 247 is positioned in the through-channel 227.

In the embodiment shown, the screw element 203 comprises the screw head 243, a screw body 251 and a threaded portion 253.

In the embodiment shown, the screw element 203 is designed as a 3-component screw. For this purpose, the screw head 243 also comprises a sealing circumference 249. An insulating end 255 is also formed at the end of the screw body 251.

The screw head 243, the sealing circumference 249 and/or the insulating end 255 can, for example, be made of an insulating material, such as a plastics material.

In the embodiment shown, the housing unit 211 further comprises a protective cap 257. The protective cap 257 can be latched to the first opening collar 239 of the through-channel 227 via latching connections 259.

In the embodiment shown, the first housing part 213 comprises an opening collar 229 arranged around the receiving opening 221. When the busbar body 101 is inserted through the receiving opening 221 into the first and second receiving spaces 219, 223, the opening collar 229 can latch with the casing collar 207 of the busbar unit 100 via latching connections 259.

When the busbar body 100 is inserted into the first and second receiving spaces 219, 223 of the housing unit 211, the busbar body 100 is arranged in the first receiving space 219, while the connecting device 111 positioned at the connecting end 105 is positioned in the second receiving space 223 of the second housing part 215.

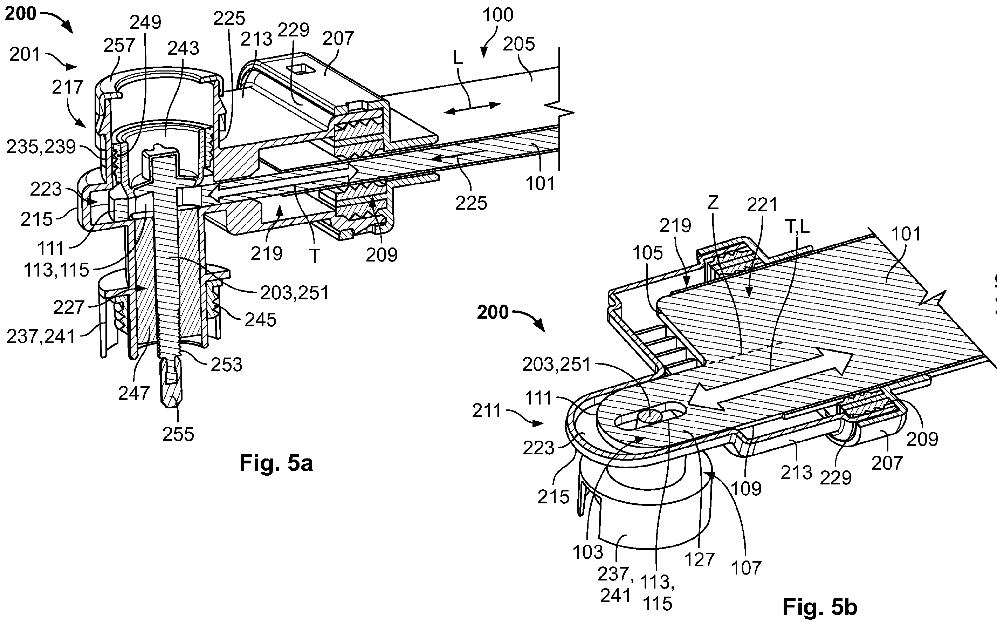

Figure 5 shows a schematic sectional view of the module connecting arrangement 200 with a busbar unit 100 from figure 4.

Image a) shows the positioning of the busbar body 101 including the connecting device 103 in the first and second receiving spaces 219, 223 of the first and second housing parts 213, 215 of the housing unit 211 of the module connecting arrangement 200. The screw element 203 is positioned extending through the through-hole 115 of the coupling unit 113 of the connecting device 103 of the busbar unit 100 in the through-channel 227 of the third housing part 217. The screw body 251 is arranged here to extend through the metal sleeve element 247.

The screw head 243 is accordingly arranged in the first casing collar 239, while the sealing element 245 is positioned in the second opening collar 241.

The opening collar 229 is latched to the casing collar 207 via the latching connections 259 and the corresponding connection is sealed by the flat conductor seal 209.

As shown in image a) by the arrows, when the busbar unit is positioned in the receiving spaces of the housing unit 211, the busbar body 101 can be moved along the direction of translation T relative to the screw element 203 of the module connecting element 201.

The corresponding movement of the busbar body 101 relative to the screw element 203 of the module connecting element 201 is illustrated in image B.

Image b) shows a sectional view of the assembled module connecting arrangement 200 of image a), oriented in plan view.

The busbar body 101 can be moved relative to the screw element 203 of the module connecting element 201 along the direction of translation, which in the embodiment shown is arranged largely along the longitudinal axis L of the busbar body 101. For this purpose, the first and second receiving spaces 219, 223 of the first and second housing parts 213, 215 have sufficient space so that the busbar body 101 including the connecting device 103 can be displaced along the direction of translation T.

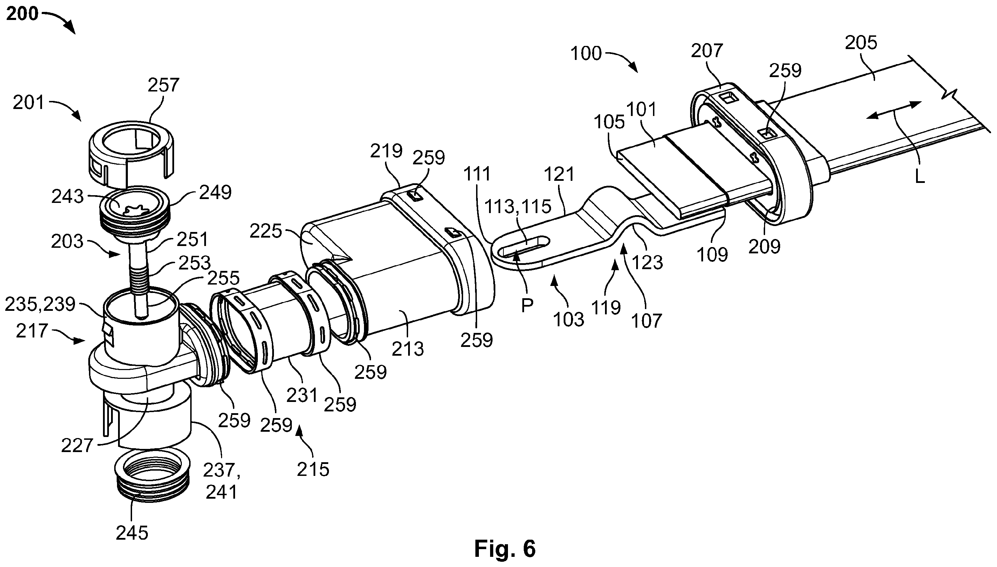

Figure 6 shows a further schematic exploded illustration of a module connecting arrangement 200 with a busbar unit 100 according to a further embodiment.

The embodiment in figure 6 is based on the embodiment in figures 4 and 5. In contrast to the embodiments in figures 4 and 5, the busbar unit 100 is designed with a connecting device 103 according to the embodiment in figure 2.

In the embodiment shown, the second housing part 215 of the housing unit 211 of the module connecting element 200 comprises a flexible housing portion 231. In the embodiment shown, the flexible housing portion is formed by a corresponding flexible material, for example a rubber material. The flexible housing portion is connected to the first housing part 213 and the third housing part 217 via latching connections 259.

As described in the comments on figure 2, the correspondingly designed connecting device 103 enables a relative movement of the busbar body 101 to the screw element 203 of the module connecting element 201 along the direction of translation defined by the longitudinal direction L1 of the slot of the coupling unit 113 as well as about the axis of rotation R defined by the bending portion 123.

The flexible housing portion 231 can cause the first housing part 213 to move relative to the third housing part 217. Such a movement is particularly relevant for the tilting or bending movements of the connecting device 103 about the bending direction defined by the bending portion 123, i.e., about the correspondingly oriented axis of rotation.

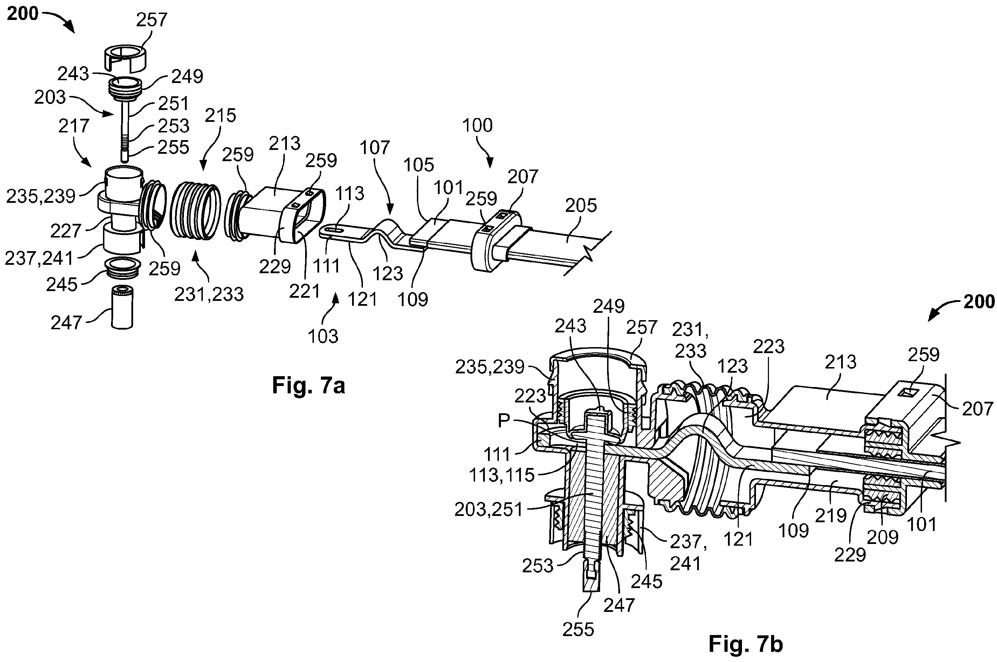

Figure 7 shows a further schematic exploded illustration and a further schematic sectional illustration of a module connecting arrangement 200 with a busbar unit 100 according to a further embodiment.

The embodiment in figure 7 is based on the embodiment in figure 6 and includes all the features described there.

In contrast to the embodiment in figure 6, the flexible housing portion 231 of the second housing part 215 is designed as a bellows 233. The flexible housing portion 231 can also be made here of a flexible material.

As an alternative to the embodiments of figures 6 and 7, in which the connecting device 103 of the busbar unit 100 is designed as a multilayer busbar element 121 with a bending portion 123 according to the embodiment of figure 2, the connecting device 103 can also be designed as a braided strip element 125 according to the embodiment in figure 3.

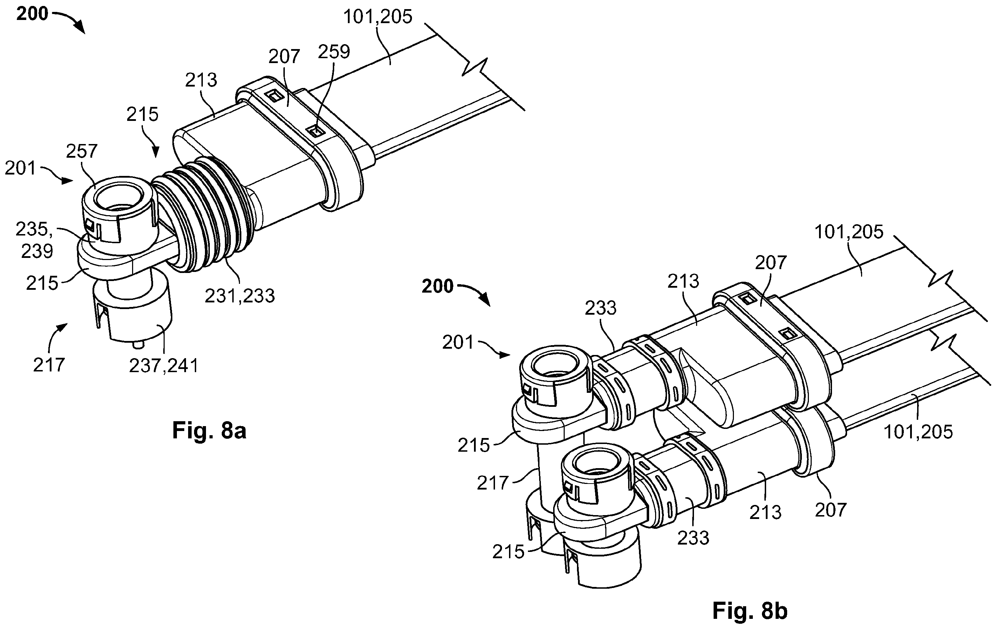

Figure 8 shows schematic illustrations of the module connecting arrangements 200 with a busbar unit 100 from figures 6 and 7.

Image a) of figure 8 shows a perspective plan view of the module connecting arrangement 200 according to the embodiment in figure 7.

Image b) also shows a perspective plan view of the module connecting arrangement 200 according to the embodiment in figure 6. Image b) shows, correspondingly, two module connecting arrangements 200.

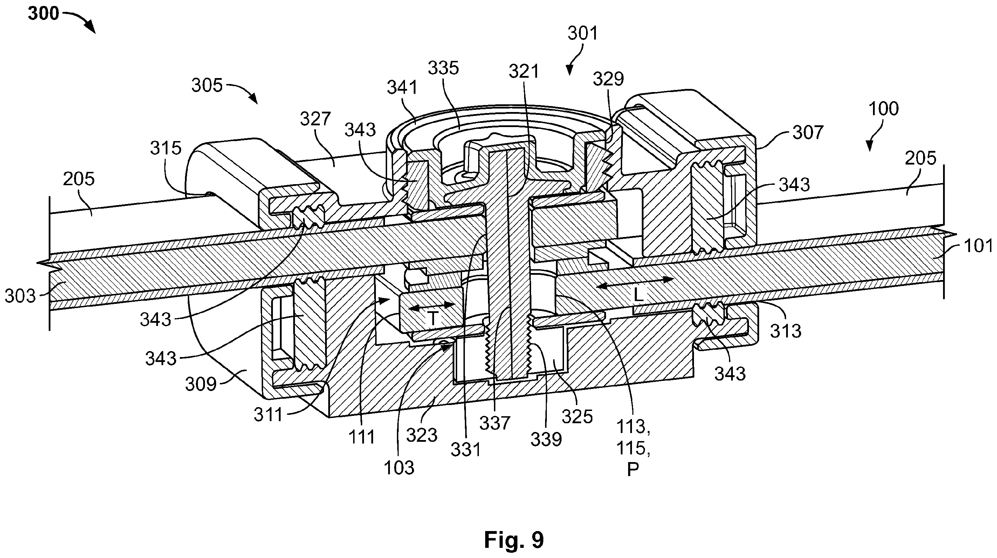

Figure 9 shows a schematic sectional illustration of a coupling arrangement 300 for busbar units 100 according to an embodiment.

According to the invention, the coupling arrangement 300 for coupling busbar units 100, 303 comprises a coupling device 301, a busbar unit 100 according to the embodiments described above and a further busbar unit 303. The busbar unit 100 and the further busbar unit 303 are connected to each other via the connecting device 103.

In the embodiment shown, the coupling arrangement 300 further comprises a protective housing unit 305 with a first housing wall 307 and a second housing wall 309. A receiving space 311 is defined between the first and second housing walls 307, 309.

A first insertion opening 313 is formed in the first housing wall 307 and a corresponding second insertion opening 315 is formed in the second housing wall 309.

The busbar unit 100 including the connecting device 103 is positioned with the connecting end 105 in the receiving space 311 via the first insertion opening 313. Via the second insertion opening 315, the further busbar unit 303 is positioned with a further connecting end 317 in the receiving space 311.

The further busbar unit 303 is connected to the busbar unit 100 via the further connecting end 317 via the coupling unit 113 of the second coupling end 111 of the connecting device 103.

In the embodiment shown, the busbar unit 100 is designed according to the embodiment in figure 1. The connecting device 103 is designed as a connecting projection 127 formed in one piece at the connecting end 105. According to the embodiment in figure 1, a through-hole 115 designed as a slot is formed on the connecting projection 127 as coupling unit 113. In the embodiment shown, the further busbar unit 303 comprises a further through-hole 331 at the further connecting end 317.

In the embodiment shown, the protective housing unit 305 comprises a housing base 323 with a threaded region 325 between the first and second housing walls 307, 309. A housing cover 327 is arranged opposite the housing base 323. The receiving space 311 is defined by the first and second housing walls 307, 309, the housing base 323 and the housing cover 327.

In the embodiment shown, the housing cover 327 comprises a feed-through opening 329. The coupling arrangement 300 further comprises a screw element 321.

To connect the busbar unit 100 to the further busbar unit 303 via the connecting device 103, the screw element 321 of the coupling arrangement 300 is guided through the feed-through opening 329 of the housing cover 327.

To connect the two busbar units 100, 303 via the screw element 321, the two busbar units 100, 303 are arranged one above the other with the two connecting ends 105, 317 in such a way that the through-hole 115 of the coupling unit 113 of the connecting device 103 of the busbar unit 100 and the further through-hole 331 of the further busbar unit 303 are arranged in alignment one above the other.

To couple the two busbar units 100, 303, the screw element 321 is passed through the further through-hole 331 of the further busbar unit 303 and through the through-hole 115 of the coupling unit 113 of the connecting device 103 of the busbar unit 100 and screwed into the threaded region 325 of the housing base 323.

The two busbar units 100, 303 can be firmly fixed to each other by means of the corresponding screw connection.

The busbar unit 100 can be displaced relative to the screw element along the direction of translation T defined by the longitudinal direction L1 of the slot and thus relative to the further busbar unit 303 through the through-hole 115, designed as a slot, of the coupling unit 113 of the connecting device 103 of the busbar unit 100.

As shown in figure 9, the receiving space 311 comprises corresponding space for this purpose, so that the displacement of the busbar body 101 of the busbar unit 100 along the direction of translation T within the receiving space 311 of the protective housing unit 305 is possible. The busbar body 101 can be moved in the first insertion opening 313 for this purpose.

In the embodiment shown, the screw element 321 comprises a screw head 335 and a screw body 337 with a threaded portion 339. The screw head 335 further comprises a sealing element 343, which seals tightly with a protective collar 341 of the housing cover 327 surrounding the feed-through opening 329.

Corresponding sealing elements 343 are also formed at the first and second insertion openings 313, 315, via which a seal to the housing casings 205 of the busbar units 100, 303 can be effected.

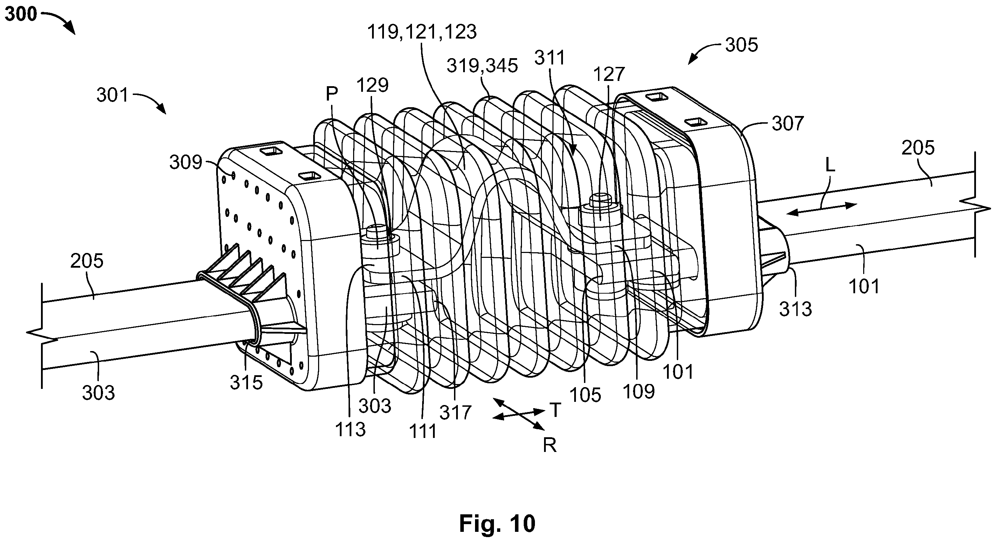

Figure 10 shows a further schematic sectional view of a coupling arrangement 300 for busbar units 100 according to a further embodiment.

The embodiment in figure 10 is based on the embodiment in figure 9.

In contrast to the embodiment in figure 9, the busbar unit 100 is designed according to the embodiment in figure 2. For this purpose, the connecting device 103 is designed as a multilayer busbar element 121 with a bending portion 123.

The busbar body 101 of the busbar unit 100 and the further busbar unit 303 are connected to one another via the connecting device 103, in that the connecting device 103 is fixed to the second coupling end 111 and the coupling unit 113 formed there to the further connecting end 317 of the further busbar unit 303.

In the embodiment shown, the connecting device 103 is fixed to the connecting end 105 of the busbar body 101 of the busbar unit 100 by means of a screw connection 129. Accordingly, the connecting device 103 is fixed to the further connecting end 317 of the further busbar unit 303 by means of a corresponding screw connection 129.

The coupling position P of the coupling unit 113 is defined by the positioning of the screw connection 129.

In the embodiment shown, the protective housing unit 305 has, in addition to the first and second housing walls 307, 309, a flexible housing part 319 formed between the two housing walls 307, 309. In the embodiment shown, the flexible housing part 319 is designed as a bellows 345.

According to the embodiment in figure 2, the multilayer busbar element 121 with the bending portion 123 can cause a relative movement of the busbar body 101 of the busbar unit 100 to the further busbar unit 303 along the direction of translation T or about the axis of rotation R. The axis of rotation R is defined here by the bending direction, which in turn is defined by the embodiment of the bending portion 123 of the multilayer busbar element 121.

In the embodiment shown, the first housing wall 307 is formed fixed to the housing casing 205 of the busbar body 101 of the busbar unit 100. Similarly, the second housing wall 309 is arranged fixed to the housing casing 205 of the further busbar unit 303. Due to the flexible housing part 319 arranged between the first and second housing walls 307, 309, a relative movement of the first and second housing walls 307, 309 with respect to one another can be brought about by corresponding elastic bending of the multilayer busbar element 121 of the connecting device 103 when the busbar body 101 of the busbar unit 100 moves relative to the further busbar unit 303.

In contrast to the embodiment in figure 9, the embodiment shown thus produces a highly flexible coupling arrangement 300.

As an alternative to the embodiment shown, the busbar unit 100 can also be designed in the embodiment of figure 3 and comprise a connecting device 103 with a corresponding braided band element 125.

As an alternative to the embodiment shown, the connection of the connecting device 103 to the busbar body 101 of the busbar unit 100 and/or the further busbar unit 303 can also be effected via a welded connection and/or crimped connection and/or punched connection in addition to the screw connection 129 shown.

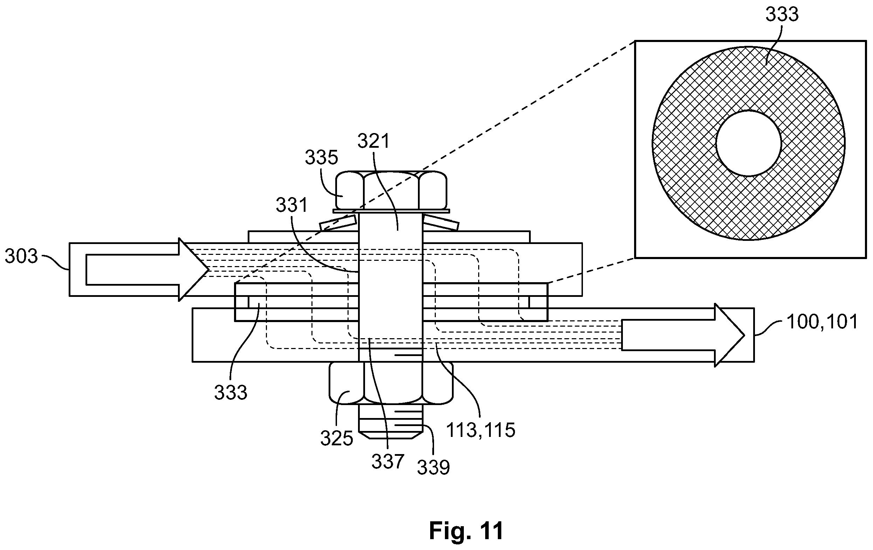

Figure 11 shows a further schematic sectional view of a coupling arrangement 300 for busbar units 100 according to a further embodiment.

The embodiment in figure 11 is based on the embodiment in figure 9. To simplify the illustration, only the two busbar units 100, 303 to be coupled and the screw element 321 including the threaded region 325 are shown of the coupling arrangement 300.

In the embodiment shown, a structured annular element 333 is formed between the two busbar units 100, 303. The screw body 337 of the screw element 321 is guided here through the structured annular element 333 so that the structured annular element 333 contacts both busbar units 100, 303 coupled to each other.

According to one embodiment, the structured annular element 333 has a higher degree of hardness than the materials from which the busbar body 101 of the busbar unit 100 and/or the further busbar unit 303 are made.

### List of reference signs

- 100: busbar unit
- 101: busbar body
- 103: connecting device
- 105: connecting end
- 107: connecting body
- 109: first coupling end
- 111: second coupling end
- 113: coupling unit
- 115: through-hole
- 117: screw element
- 119: flexibility portion
- 121: multilayer busbar element
- 123: bending portion
- 125: braided band element
- 127: connecting projection
- 129: screw connection
- 131: surface

- 200: module connecting arrangement
- 201: module connecting element
- 203: screw element
- 205: housing casing
- 207: casing collar
- 209: flat conductor seal
- 211: housing unit
- 213: first housing part
- 215: second housing part
- 217: third housing part
- 219: first receiving space
- 221: receiving opening
- 223: second receiving space
- 225: opposite side
- 226: receiving direction
- 227: through-channel
- 229: opening collar
- 231: flexible housing portion
- 233: bellows
- 235: first end
- 237: second end
- 239: first opening collar
- 241: second opening collar
- 243: screw head
- 245: sealing element
- 247: metal sleeve element
- 249: sealing circumference
- 251: screw body
- 253: threaded portion
- 255: insulating end
- 257: protective cap
- 259: latching connection

- 300: coupling arrangement
- 301: coupling device
- 303: further busbar unit
- 305: protective housing unit
- 307: first housing wall
- 309: second housing wall
- 311: receiving space
- 313: first insertion opening
- 315: second insertion opening
- 317: further connecting end
- 319: flexible housing part
- 321: screw element
- 323: housing base
- 325: threaded region
- 327: housing cover
- 329: feed-through opening
- 331: further through-hole
- 333: structured annular element
- 335: screw head
- 337: screw body
- 339: threaded portion
- 341: protective collar
- 343: sealing element
- 345: bellows

- P: coupling position
- T: direction of translation
- R: axis of rotation
- L: longitudinal axis
- L1: longitudinal direction of the slot
- Z: centre

## Claims

1. A busbar unit (100) comprising a busbar body (101) and a connecting device (103) for connecting the busbar body (101) to a module connecting element and/or to a further busbar unit (303), wherein the connecting device (103) has a connecting body (107) which projects from a connecting end (105) of the busbar body (101) and has a first coupling end (109) and a second coupling end (111) opposite the first coupling end (109), wherein the connecting device (103) is formed on the connecting end (105) of the busbar body (101) via the first coupling end (109), wherein the connecting body (107) comprises a coupling unit (113) at the second coupling end (111) for coupling the connecting device (103) to the module connecting element and/or the further busbar unit (303), wherein a coupling position (P) of the connecting device (103) is defined via the coupling unit (113), and wherein the coupling position (P) of the connecting device (103) can be variably aligned relative to the busbar body (101) of the busbar unit (100) with respect to a direction of translation (T) and/or an axis of rotation (R).

2. The busbar unit (100) as claimed in claim 1, wherein the direction of translation (T) is aligned at least partially along a longitudinal axis (L) of the busbar body (101) of the busbar unit (100), and/or wherein the axis of rotation (R) is aligned at least partially along the longitudinal axis (L) or at right angles to the longitudinal axis (L) of the busbar body (101) of the busbar unit (100).

3. The busbar unit (100) as claimed in claim 1 or 2, wherein the coupling unit (113) at the first coupling end (109) of the connecting body (107) has a through-hole (115) designed as a slot, wherein the busbar body (101) of the busbar unit (100) can be coupled to the module connecting element and/or the further busbar unit (303) via a screw connection via the through-hole (115), and wherein the coupling position (P) is defined via the positioning of a screw element (117) in the through-hole (115).

4. The busbar unit (100) as claimed in claim 3, wherein a longitudinal direction (L1) of the through-hole (115) designed as a slot is oriented at least partially along the direction of translation (T).

5. The busbar unit (100) as claimed in one of the preceding claims, wherein the connecting body (107) of the connecting device (103) comprises a flexibility portion (119) formed between the first coupling end (109) and the second coupling end (111), wherein the flexibility portion (119) allows elastic bending of the connecting device (103) along a bending direction, and/or wherein the connecting device (103) comprises a multilayer busbar element (121) having a bending portion (123), and/or wherein the connecting device (103) comprises a braided band element (125) and/or fabric band element.

6. The busbar unit (100) as claimed in one of the preceding claims, wherein the connecting device (103) is screwed and/or welded and/or crimped and/or punched via the first coupling end (109) to the connecting end (105) of the busbar body (101) of the busbar unit (100), and/or wherein the coupling unit (113) at the second coupling end (111) of the connecting body (107) of the connecting device (103) is arranged to effect a screw connection (129) and/or a welded connection and/or a crimped connection and/or a punched connection with the module connecting element and/or the further busbar unit (303).

7. The busbar unit (100) as claimed in one of the preceding claims, wherein the connecting device (103) is formed at a distance from a centre (Z) of the connecting end (105) of the busbar body (101) at the connecting end (105), and/or wherein the connecting device (103) is formed in one piece as a connecting projection (127) at the connecting end (105) of the busbar body (101) of the busbar unit (100), and/or wherein the busbar body (101) of the busbar unit (100) is formed from one of the following materials: aluminium, copper, aluminium alloy, copper alloy, and/or wherein the connecting body (107) of the connecting device (103) is formed from one of the following materials: aluminium, copper, aluminium alloy, copper alloy.

8. A module connecting arrangement (200) for the electrical connection of modules, wherein the module connecting arrangement (200) comprises at least one module connecting element (201) and a busbar unit (100) as claimed in one of preceding claims 1 to 7, wherein the module connecting element (201) comprises a screw element (203), and wherein the screw element (203) is guided through a through-hole (115) of the coupling unit (113) of the connecting device (103).

9. The module connecting arrangement (200) as claimed in claim 8, wherein the screw element (203) of the module connecting element (201) is guided through the through-hole (115) of the connecting device (103) of the busbar unit (100) and is arranged to be movable along the direction of translation (T) and/or around the axis of rotation (R) relative to the busbar body (101) of the busbar unit (100), and/or wherein a housing casing (205) is formed on the busbar body (101), and wherein a casing collar (207) is formed adjacently to the housing casing (205) at the connecting end (105), and/or wherein the casing collar (207) comprises a flat conductor seal (209).

10. The module connecting arrangement (200) as claimed in one of preceding claims 8 to 9, wherein the module connecting element (201) comprises a housing unit (211) with a first housing part (213), a second housing part (215) and a third housing part (217), wherein the first housing part (213) defines a first receiving space (219) with a receiving opening (221), wherein the second housing part (215) defines a second receiving space (223), wherein the second receiving space (223) is designed to communicate with the first receiving space (219) and adjoins the first receiving space (219) on a side (225) opposite the receiving opening (221), wherein the busbar unit (100) can be inserted into the housing unit (211) along a receiving direction (226) through the receiving opening (221), wherein upon insertion the connecting end (105) of the busbar body (101) can be arranged in the first receiving space (219) and the connecting device (103) can be arranged in the second receiving space (223), and wherein the third housing part (217) adjoins the second housing part (215) and comprises a through-channel (227) oriented perpendicular to the receiving direction (226) of the first receiving space (219) for receiving the screw element (203).

11. The module connecting arrangement (200) as claimed in any of the claims 8 to 10, wherein the first housing part (213) comprises an opening collar (229) arranged around the receiving opening (221), and wherein the opening collar (229) can be coupled to the casing collar (207) of the housing casing (205) of the busbar body (101), and/or wherein the second housing part (215) comprises a flexible housing portion (231), and wherein the first housing part (213) is movable relative to the third housing part (217) via the flexible housing portion (231).

12. The module connecting arrangement (200) as claimed in any of the claims 8 to 11, wherein the flexible housing portion (231) is formed from a flexible material and/or as a bellows (233), and/or wherein an opening collar (239, 241) is formed at two opposite ends (235, 237) of the through-channel (227), wherein a screw head (243) of the screw element (203) and a sealing element (245) can be positioned in the opening collars (239, 241), wherein a metal sleeve element (247) is positioned in the through-channel (227), and wherein the screw element (203) can be passed through the sleeve element (247), and/or wherein the screw element (203) is designed as a 3-component screw.

13. A coupling arrangement (300) for coupling two busbar units (100), comprising a coupling device (301), a busbar unit (100) as claimed in one of preceding claims 1 to 7 and a further busbar unit (303), wherein the busbar unit (100) and the further busbar unit (303) are connected to one another via the connecting device (103) of the busbar unit (100).

14. The coupling arrangement (300) as claimed in claim 13, further comprising a protective housing unit (305) with a first housing wall (307), a second housing wall (309) and a receiving space (311) defined between the first and second housing walls (307, 309), wherein a first insertion opening (313) is formed in the first housing wall (307) and a second insertion opening (315) is formed in the second housing wall (309), wherein the busbar unit (100) with the connecting end (105) and the connecting device (103) can be positioned in the receiving space (311) via the first insertion opening (311), wherein the further busbar unit (303) with a further connecting end (317) can be positioned in the receiving space (311) via the second insertion opening (315), and wherein the busbar unit (100) and the further busbar unit (303) connected to the busbar unit (100) via the connecting device (103) can be moved relative to one another within the receiving space (311).

15. The coupling arrangement (300) as claimed in claim 13 or 14, wherein the protective housing unit (305) comprises a flexible housing part (319) arranged between the first and second housing walls (307, 309), and/orwherein the coupling arrangement (300) further comprises a screw element (321), wherein the protective housing unit (305) comprises, between the first housing wall (307) and the second housing wall (309), a housing base (323) with a threaded region (325) and a housing cover (327) arranged opposite the housing base (323), wherein a feed-through opening (329) for feeding through the screw element (321) is formed in the housing cover (327), wherein the screw element (321) can be fed through a further through-hole (331) formed at the further connecting end (317) of the further busbar unit (303) and through a through-hole of the coupling device (301) of the connecting device (103) of the busbar unit (100) and can be screwed into the threaded region (325), and/or wherein the coupling arrangement (300) further comprises a structured annular element (333), wherein the structured annular element (333) is positionable between the busbar unit (100) and the further busbar unit (303), wherein the screw element (321) is guidable through the structured annular element (333), and wherein the structured element (333) is made of a material which has a higher degree of hardness than the connecting device (103) and/or the further busbar unit (303).
